## Europäisches Patentamt
## European Patent Office
## Office européen des brevets

(11) Numéro de publication: **0 228 948 B1**

(12) **FASCICULE DE BREVET EUROPEEN**

(45) Date de publication de fascicule du brevet:
06.03.91

(51) Int. Cl.5: **G06F 5/01**

(21) Numéro de dépôt: **86402733.9**

(22) Date de dépôt: **09.12.86**

(54) **Circuit décaleur permettant de décaler un mot de N bits ou k mots de N sur k bits, k étant un entier fixé.**

(30) Priorité: **13.12.85 FR 8518528**

(43) Date de publication de la demande:
**15.07.87 Bulletin 87/29**

(45) Mention de la délivrance du brevet:
**06.03.91 Bulletin 91/10**

(84) Etats contractants désignés:
**DE GB IT**

(56) Documents cités:
**US-A- 3 887 799**
**US-A- 3 934 132**
**US-A- 4 411 009**

**IBM TECHNICAL DISCLOSURE BULLETIN, vol. 23, no. 1, juin 1980, pages 120-122, New York, US; J.E. GERSBACH: "Algebraic/logical shift matrix"**

(73) Titulaire: **THOMSON-CSF**
**51, Esplanade du Général de Gaulle**
**F-92800 Puteaux(FR)**

(72) Inventeur: **Cognault, Marc Thomson-CSF**
**SCPI-19, avenue de Messine**
**F-75008 Paris(FR)**
Inventeur: **Lenormand, Eric Thomson-CSF**
**SCPI-19, avenue de Messine**
**F-75008 Paris(FR)**
Inventeur: **Albarello, Alain Thomson-CSF**
**SCPI-19, avenue de Messine**
**F-75008 Paris(FR)**

(74) Mandataire: **Turlèque, Clotilde et al**
**THOMSON-CSF SCPI**
**F-92045 PARIS LA DEFENSE CEDEX 67(FR)**

## Description

L'invention concerne un circuit logique, dit circuit décaleur, ou "barrel shifter" en anglais, permettant de décaler un mot de N bits ou bien k mots de $\frac{N}{k}$ bits, k étant un entier diviseur de N, ces deux cas, ainsi que le type de décalage à réaliser, étant distingués par des signaux de commande.

Un circuit décaleur classique permettant de décaler de n bits un mot de N bits, où N est une puissance de 2 et où n est inférieur à N, comporte :

- une borne d'entrée recevant le mot binaire de N bits à décaler ;
- des moyens de multiplexage ayant une entrée multiple reliée à cette borne d'entrée et ayant deux sorties multiples fournissant fournissant respectivement deux mots binaires de N bits, A et B, fonctions des bits du mot à décaler et fonctions du type de décalage à réaliser ;
- une matrice de commutation ayant deux entrées multiples reliées respectivement aux deux sorties des moyens de multiplexage, ayant une entrée multiple de commande, et ayant une sortie multiple fournissant un mot binaire S constitué de N bits obtenus par une rotation à gauche, de r bits, appliquée aux deux mots binaires A, B, r étant égal à n ou à N-n selon le type de décalage à réaliser ;
- un décodeur de commande recevant un mot binaire définissant le type de décalage à réaliser, et ayant une sortie multiple reliée à l'entrée de commande de la matrice de commutation.

Les différents types de décalage à réaliser sur un mot de N bits peuvent être : un décalage logique à gauche ; un décalage logique à droite ; un décalage arithmétique à droite ; ou une rotation. Le décalage arithmétique à droite ne peut concerner qu'un nombre réel ; le signe de ce nombre est alors codé par le bit de poids le plus fort et sa mantisse est codée par les N-1 autres bits, avec une complémentation à 2 ou 1 quand sa valeur est négative.

Dans tous les cas, la matrice réalise une rotation à gauche. Les décalages ou les rotations de n bits à droite, sur le mot à décaler, sont obtenus par une rotation de N-n bits à gauche, réalisée sur les mots A, B.

Dans certaines applications, tel que le traitement de signaux, il est nécessaire de réaliser à la fois un décalage sur la partie réelle et un décalage sur la partie imaginaire d'un nombre complexe, et alternativement de réaliser un décalage sur un nombre réel. Pour de telles applications, une solution classique consiste à utiliser deux décaleurs distincts, l'un pour les nombres réels et l'autre pour les nombres complexes, et des multiplexeurs permettant d'envoyer les nombres à décaler alternativement vers chacun des décaleurs et permettant de prélever alternativement les nombres décalés restitués par les deux décaleurs.

Le but de l'invention est de réaliser un circuit décaleur plus simple que ce circuit classique. L'objet de l'invention est un circuit décaleur comportant une matrice de commutation ayant une structure particulière permettant de réaliser des décalages alternativement sur un mot de N bits ou bien sur k mots de $\frac{N}{k}$ bits. Ces k mots, pour k = 2, peuvent être notamment la partie réelle et la partie imaginaire d'un nombre complexe. Le fonctionnement de cette matrice de commutation est modifié sous la commande d'un signal binaire distinguant deux types de données à décaler : les mots de N bits et les paquets de k mots de $\frac{N}{k}$ bits.

Selon l'invention, un circuit décaleur permettant de décaler un mot de N bits ou k mots de $\frac{N}{k}$ bits, k étant un entier fixé qui est un diviseur de N, ces deux types de données à décaler étant distingués par la valeur d'un signal binaire M, comportant :

- des moyens de multiplexage recevant les N bits de données à décaler et restituant deux mots binaires de N bits, A et B, fonctions des bits de données à décaler, du type de ces données, et du type de décalage à réaliser ;
- une matrice de commutation recevant les mots A et B et restituant un mot binaire de N bits sur une sortie constituant la sortie du circuit décaleur, comportant des colonnes, $A_i$ pour i = 0 à N-1, $B_j$ pour j = 0 à N-1, $S_m$ pour m = 0 à N-1, intercalées et correspondant respectivement aux bits des mots A, B, S, et comportant N lignes $L_0$ , ... , $L_{N-1}$ , et N x N transistors pour coupler les colonnes correspondant à S aux colonnes correspondant à A et B, ces transistors étant reliés à N entrées de commande $C_r$ , pour r = 0 à N-1, chaque entrée $C_r$ commandant une rotation de r bits sur les mots A et B ;
- un décodeur couplé aux entrées $C_0$ , ... , $C_{N-1}$ pour commander la matrice de commutation en fonction du type de décalage à réaliser ;

est caractérisé en ce que la matrice de commutation comporte en outre des moyens pour réaliser k-1 coupures dans chaque ligne $L_0$ , ... , $L_{N-1}$ sous la commande du signal M, coupures situées de telle façon que les colonnes $S_m$ pour

$$m = h.\frac{N}{k} \text{ à } (h+1).\frac{N}{k} - 1$$

ne peuvent être couplées qu'aux colonnes $A_i$ pour

$$i = h.\frac{N}{k} \text{ à } (h+1).\frac{N}{k} - 1$$

et aux colonnes $B_j$ pour

$$j = h.\frac{N}{k} \text{ à } (h+1).\frac{N}{k} - 1$$

pour chaque valeur de h de 0 à k-1, lorsque le signal M indique que les données à décaler sont constituées de k mots de $\frac{N}{k}$ bits, et en ce que le décodeur reçoit un mot binaire de valeur r, fonction du type de décalage à réaliser, reçoit le signal M, et fournit :
- deux signaux de commande, aux entrées

$$C_r \text{ et } C_{(\frac{(k-1)}{k}.N+r)}$$

simultanément, lorsque le signal M indique que les données à décaler sont constituées de k mots de $\frac{N}{k}$ bits à décaler ;
- un seual signal de commande, à l'entrée $C_r$ , lorsque le signal M indique que les données à décaler sont constituées d'un mot de N bits.

L'invention sera mieux comprise et d'autres détails apparaîtront à l'aide de la description ci-dessous et des figures l'accompagnant :
- la figure 1 représente le schéma synoptique d'un exemple de réalisation du circuit décaleur selon l'invention ;
- les figures 2a et 2b illustrent le fonctionnement du circuit décaleur selon l'invention ;
- la figure 3 représente le schéma d'une matrice de commutation d'un circuit décaleur classique, pour des mots de 6 bits ;
- les figures 4, 5, et 6 illustrent le fonctionnement de cette matrice de commutation ;
- la figure 7 illustre le fonctionnement de la matrice de commutation d'un exemple de réalisation du circuit décaleur selon l'invention, pour mots de 6 bits ;
- la figure 8 représente le schéma synoptique de la matrice de commutation d'un exemple de réalisation du circuit décaleur selon l'invention, pour des mots de N bits .
- la figure 9 représente le schéma synoptique de la matrice de commutation d'un exemple de réalisation du circuit décaleur selon l'invention, pour k mots de $\frac{N}{k}$ bits.

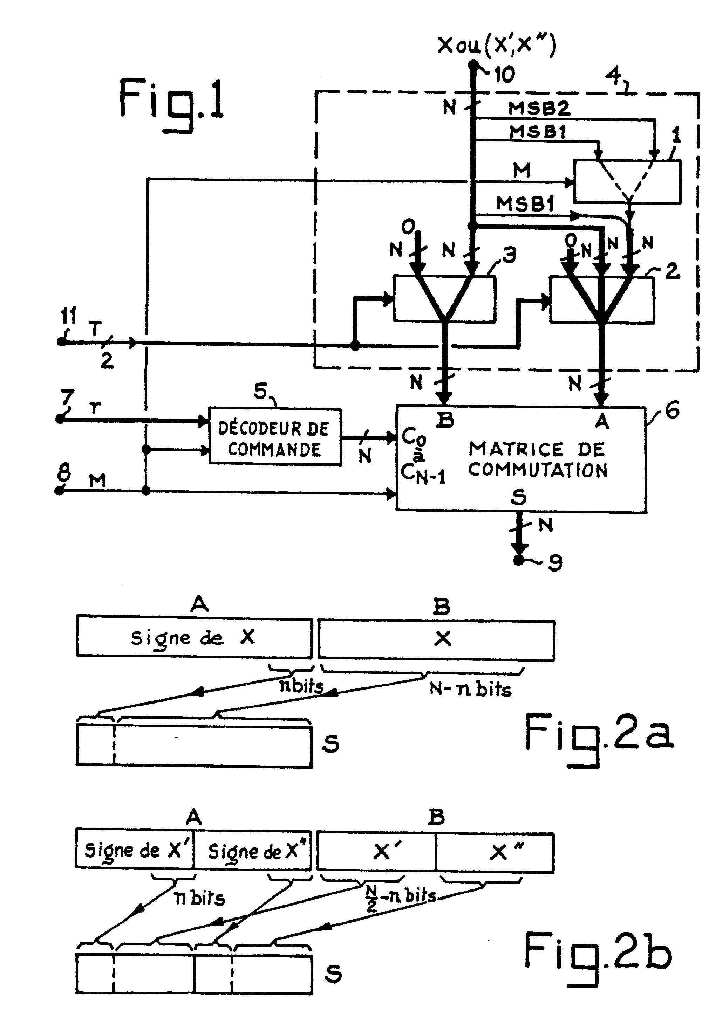

Sur la figure 1, un exemple de réalisation d'un circuit décaleur selon l'invention pour mots de N bits ou $\frac{N}{2}$ bits, comporte : une borne d'entrée 10 recevant soit un mot X de N bits, soit un couple de mots $X'$, $X''$ de $\frac{N}{2}$ bits chacun ; une borne d'entrée 8 recevant un bit M indiquant le type des données à décaler ; une borne d'entrée 7 recevant un mot binaire de commande dont la valeur r est comprise entre 0 et N-1 et détermine le nombre de bits du décalage à réaliser ; une borne d'entrée 11 recevant un mot binaire T de 2 bits indiquant le type de décalage ; des moyens de multiplexage 4 ; un décodeur de commande 5 ; une matrice de commutation 6 ; et une borne de sortie 9.

Le mot binaire de N bits qui est appliqué à la borne d'entrée 10, peut être la mantisse et le bit de signe d'un nombre réel de N bits ou les mantisses et les bits de signe de deux nombres réels de $\frac{N}{2}$ bit, ces deux nombres réels pouvant être respectivement la partie réelle et la partie imaginaire d'un nombre complexe.

Si le mot binaire appliqué à la borne d'entrée 10 représente un nombre réel X, le bit de signe de X est constitué par le bit de plus fort poids dans le mot de N bits, et est noté MSB1. Si le mot binaire appliqué à la borne d'entrée 10 représente deux nombres réels $X'$ et $X''$ , leurs bits de signe sont constitués respectivement par le bit de poids le plus fort dans chacun des 2 mots de $\frac{N}{2}$ bits, et sont notés MSB1 et MSB2. Les moyens de multiplexage 4 possèdent deux sorties fournissant respectivement deux mots binaires de N bits, notés A et B, à deux entrées multiples de la matrice de commutation 6, qui sont notées A et B respectivement.

3

Les mots A et B sont fonctions du mot binaire T et du signal binaire M, ceux-ci étant appliqués respectivement à deux entrées de commande des moyens de multiplexage 4. Le signal M et le mot binaire de commande, de valeur r, sont appliqués respectivement à deux entrées du décodeur 5. Le décodeur 5 possède N sorties reliées respectivement à N entrées de commande de la matrice de commutation 6 pour lui fournir N signaux logiques de commande $C_0$ , ... , $C_{N-1}$ . Une autre entrée de commande de la matrice de commutation 6 reçoit le signal logique M.

Le tableau ci-dessous représente le fonctionnement des moyens de multiplexage 4 en fonction du mot T indiquant le type de décalage à réaliser et en fonction du signal M indiquant le type des données à décaler, n représentant le nombre de bits à décaler dans X ou $X'$ et $X''$, et M étant égal à 1 pour les mots de N bits et à 0 pour les couples de mots de $\frac{N}{2}$ bits.

| Décalage de n bits à réaliser | T | M | r | A | B |
|---|---|---|---|---|---|
| - Décalage logique à gauche sur un mot binaire X de N bits | 00 | 1 | n | X | 0 |
| - Décalage logique à droite sur un mot binaire X de N bits | 01 | 1 | N-n | 0 | X |
| - Décalage arithmétique à droite sur un nombre réel X de N bits | 10 | 1 | N-n | signe de X | X |
| - Rotation sur un mot binaire X de N bits | 11 | 1 | n | X | X |
| - Décalage logique à gauche, sur deux mots binaires X', X" de $\frac{N}{2}$ bits chacun | 00 | 0 | n | X',X" | 0 |
| - Décalage logique à droite, sur deux mots binaires X', X" de $\frac{N}{2}$ bits chacun | 01 | 0 | $\frac{N}{2}$ -n | 0 | X',X" |
| - Décalage arithmétique à droite, sur deux nombres réels X', X" de $\frac{N}{2}$ bits | 10 | 0 | $\frac{N}{2}$ -n | signe de X' signe de X" | X',X" |
| - Rotation sur deux mots binaires X' , X" de $\frac{N}{2}$ bits chacun | 11 | 0 | n | X',X" | X',X" |

Naturellement le nombre de bits du décalage, n, ne doit pas dépasser $\frac{N}{2}$ - 1 lorsqu'il s'agit de décaler deux mots binaires de $\frac{N}{2}$ bits chacun, et N-1 lorsqu'il s'agit de décaler un mot binaire de N bits.

Comme dans les circuits décaleurs connus, la matrice 6 permet de réaliser un décalage à gauche de n bits sur X ou $X'$, $X''$ en opérant une rotation à gauche de n bits sur A, B et permet de réaliser un décalage à droite de n bits, en opérant une rotation à gauche de r = N-n bits, grâce à la présentation particulière des bits appliqués aux entrées A et B, cette présentation particulière étant assurée par les moyens de multiplexage 4 conformément au tableau précédent.

Dans l'exemple de réalisation représenté sur la figure 1, les moyens de multiplexage 4 comportent un multiplexeur 1 à deux entrées et une sortie de 1 bit, un multiplexeur 2 à trois entrées et une sortie de N bits, et un multiplexeur 3 à deux entrées et une sortie de N bits. L'entrée des moyens 4 reliée à la borne d'entrée 10 reçoit un mot binaire de N bits qui peut être considéré comme constitué de deux mots de $\frac{N}{2}$ bits ayant pour bits de poids le plus fort respectivement le bit appelé MSB1 et le bit appelé MSB2. Ces deux bits sont appliqués respectivement à une première et une seconde entrée du multiplexeur 1.

Le multiplexeur 1 possède une entrée de commande reliée à l'entrée des moyens 4 recevant le signal binaire M et possède une sortie reliée à $\frac{N}{2}$ bits d'une première entrée du multiplexeur 2, $\frac{N}{2}$ autres bits de cette entrée recevant le bit MSB1. Les N bits fournis à la borne d'entrée 10 sont appliqués aussi à une seconde entrée du multiplexeur 2 et à une première entrée du multiplexeur 3. Une troisième entrée du multiplexeur 2 et une seconde entrée du multiplexeur 3 reçoivent N bits ayant une valeur zéro permanente. Les multiplexeurs 2 et 3 ont chacun une entrée de commande reliée à la borne d'entrée 11 et recevant le mot binaire T. Les sorties des multiplexeurs 2 et 3 constituent les sorties des moyens de multiplexage 4 et sont reliées respectivement aux entrées A et B de la matrice 6.

Lorsque le signal binaire M indique que les données à décaler sont constituées par un mot de N bits, dont MSB1 est le bit de plus grand poids, le multiplexeur 1 transmet ce bit aux $\frac{N}{2}$ bits de poids le plus fort de la première entrée du multiplexeur 2. Simultanément le bit MSB1 est appliqué directement et en permanence aux $\frac{N}{2}$ bits de poids plus faible de cette première entrée. Dans le cas où le bit M indique que les données à décaler sont constituées de deux mots binaires $X'$, $X''$ de $\frac{N}{2}$ bits chacun, le multiplexeur 1 transmet le bit MSB2 et la première entrée du multiplexeur 2 reçoit ainsi un mot binaire de N bits constitués de $\frac{N}{2}$ bits ayant la valeur de MSB1 et de $\frac{N}{2}$ bits ayant la valeur de MSB2.

Le multiplexeur 2 est commandé par le mot binaire T indiquant le type de décalage, afin de transmettre :

- les bits appliqués à sa première entrée lorsque le mot binaire T vaut 10 ;
- ou les bits appliqués à la seconde entrée, c'est-à-dire le nombre X ou les nombres $X'$, $X''$, lorsque le mot binaire T vaut 00 ou 11 ;
- ou les bits appliqués à sa troisième entrée, c'est-à-dire N bits de valeur zéro, lorsque le mot binaire T vaut 01.

Le multiplexeur 3 est commandé par le mot binaire T pour transmettre les bits appliqués à sa première entrée c'est-à-dire le nombre X ou les nombres $X'$, $X''$, lorsque le mot binaire T vaut 01 ou 10 ou 11, et pour transmettre les bits appliqués à sa seconde entrée c'est-à-dire N bits de valeur zéro, lorsque le mot binaire T vaut 00.

La figure 2a représente le format des mots binaires A et B fournis par les sorties des moyens de multiplexage 4, et le format du mot binaire S fourni par la sortie de la matrice 6, dans le cas où un nombre réel X de N bits est à décaler de n bits à droite. Le mot binaire A est constitué de N bits égaux aux bits de signe de X. Le mot binaire B est constitué des N bits du nombre X, le bit le plus à gauche et ayant le poids le plus fort étant le bit de signe de X. Une rotation de r = N-n bits vers la gauche, réalisée par la matrice 6 sur les mots binaires A et B dans cet ordre, fournit un mot binaire S constitué à droite de N-n bits de poids fort de X et constituée à gauche de n bits égaux au bit de signe de X. Le mot binaire S obtenu est donc le nombre X ayant subi un décalage arithmétique à droite, de n bits.

La figure 2b représente le format des mots binaires A, B et S, dans le cas où deux nombres réels $X'$ et $X''$ sont à décaler de n bits à droite. Le mot binaire A est alors constitué à gauche de $\frac{N}{2}$ bits égaux au bit de signe de $X'$ et est constitué à droite de $\frac{N}{2}$ bits égaux au bit de signe de $X''$. Le mot binaire B est alors constitué à gauche des $\frac{N}{2}$ bits représentant le nombre $X'$ et est constitué à droite des $\frac{N}{2}$ bits représentant le nombre $X''$, les bits de poids le plus fort dans chacun de ces deux mots de $\frac{N}{2}$ bits étant les bits de signe de $X'$ et de $X''$.

Le mot binaire S qui est fourni par la matrice 6 comporte deux demi-mots constitués de $\frac{N}{2}$ bits chacun. Un premier demi-mot, de poids faible, est constitué à droite de $\frac{N}{2}$ - n bits du nombre $X''$ et à gauche de n bits égaux au bit de signe $X''$. Un second demi-mot, de poids fort, est constitué à droite de $\frac{N}{2}$ - n bits du nombre $X'$ et à gauche de n bits égaux au bit de signe de $X'$. Il apparaît que ce mot binaire S ne peut pas être obtenu par une simple rotation à gauche de r = N-n bits, effectuée sur les mots binaires A et B, dans le cas d'un décalage à droite sur deux mots de $\frac{N}{2}$ bits.

Au contraire, il apparaît que les n bits de signe de $X'$ et les n bits de signe de $X''$, prélevés dans le mot A, doivent subir une rotation de $\frac{N}{2}$ - n bits vers la gauche alors que les $\frac{N}{2}$ - n bits de $X'$ et les $\frac{N}{2}$ - n bits de $X''$, prélevés dans B, doivent subir une rotation de N-n bits vers la gauche. Un décalage arithmétique de n bits à droite sur les nombres $X'$ et $X''$ peut donc être obtenu en réalisant simultanément une rotation à gauche de $r_1 = \frac{N}{2}$ - n bits sur certains bits du mot binaire A et une rotation à gauche de $r_2 = N-n$ bits sur certains bits du mot binaire B, dès lors que A et B ont le format décrit précédemment. Ces deux relations permettent de relier $r_1$ et $r_2$ :

$$r_2 = r_1 + \frac{N}{2}$$

D'une manière analogue il est possible de vérifier qu'un décalage logique à gauche de n bits sur deux mots binaires $X'$ et $X''$ de $\frac{N}{2}$ bits peut être obtenu en réalisant simultanément une rotation de $r_1$ = n bits sur certains bits de A et de $r_2 = n + \frac{N}{2}$ bits sur certains bits de B, le mot A étant constitué par $X'$, $X''$ et le mot B étant constitué par N bits nuls. Les valeurs de $r_1$ et $r_2$ sont encore liées par la relation $r_2 = r_1 + \frac{N}{2}$

En conclusion, pour un décalage à gauche ou pour un décalage à droite sur deux mots de $\frac{N}{2}$ bits, il faut réaliser simultanément deux rotations à gauche sur certains bits des mots A et B, ces rotations étant de :

$r_1 = r$ bits

et de $r_2 = r + \frac{N}{2}$ bits

avec $r = n$ pour un décalage de $n$ bits à gauche

ou $r = \frac{N}{2} - n$ pour un décalage de $n$ bits à droite.

Pour réaliser simultanément ces deux rotations à gauche sur certains bits des mots A et B, la matrice de commutation d'un circuit décaleur de type classique ne convient pas puisqu'elle agit sur tous les bits de A et B, il est nécessaire de la modifier. La description ci-dessous décrit le schéma et le fonctionnement d'une matrice de commutation d'un circuit décaleur classique puis décrit les modifications nécessaires pour réaliser ces deux rotations simultanées à gauche, sur certains bits de A et B, dans le cas d'un décalage à droite de 2 bits sur deux mots de 3 bits.

$N = 6$, $n = 2$ et donc $r_1 = \frac{N}{2} - n = 1$ et $r_2 = N-n = 4$. Dans cet exemple, le format des mots A, B, et S est :

| Signe X' | signe X'' | | X' | X'' |
|---|---|---|---|---|
| $A_5$ $A_4$ $A_3$ | $A_2$ $A_1$ $A_0$ | | $B_5$ $B_4$ $B_3$ | $B_2$ $B_1$ $B_0$ |

| $S_5$ $S_4$ $S_3$ | $S_2$ $S_1$ $S_0$ |
|---|---|
| $A_4$ $A_3$ $B_5$ | $A_1$ $A_0$ $B_2$ |

Dans le cas d'un décalage logique de 2 bits à gauche sur 2 mots binaires X' X'', le format des mots A, B, S est :

| X' | X'' | | 0 0 0 | 0 0 0 |
|---|---|---|---|---|
| $A_5$ $A_4$ $A_3$ | $A_2$ $A_1$ $A_0$ | | $B_5$ $B_4$ $B_3$ | $B_2$ $B_1$ $B_0$ |

| $S_4$ $S_4$ $S_3$ | $S_2$ $S_1$ $S_0$ |
|---|---|
| $A_3$ $B_5$ $B_4$ | $A_0$ $B_2$ $B_1$ |

$$r_1 = n = 2$$
$$r_2 = n + \frac{N}{2} = 5$$

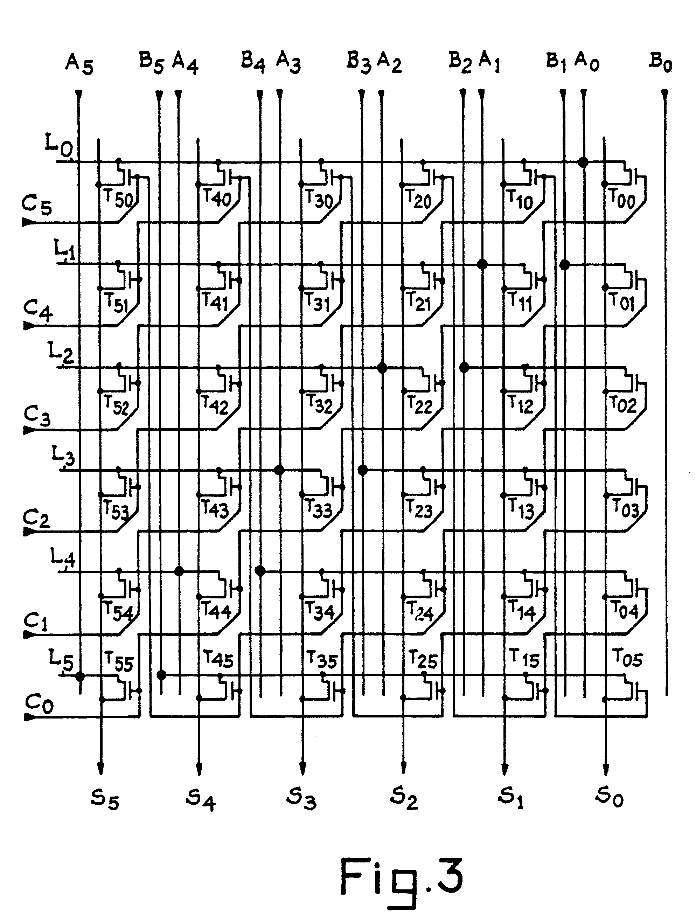

La figure 3 représente le schéma d'un mode de réalisation d'une matrice de commutation d'un circuit décaleur classique pour mots binaires de six bits. Elle reçoit un mot binaire A constitué de bits $A_5$, $A_4$, ..., $A_0$ et un mot binaire B constitué de bits $B_5$, $B_4$, ..., $B_0$. Elle fournit un mot binaire S constitué de bits $S_5$, $S_4$, ..., $S_0$. Elle ne réalise que des rotations à gauche, une rotation de $r$ bits étant commandée par un signal logique appliqué à une entrée notée $C_r$, $r$ pouvant prendre les valeurs de 0 à 5. Les mots binaires A, B, et S, correspondent à des colonnes de la matrice, qui sont dans l'ordre $A_5$, $S_5$, $B_5$, $A_4$, $S_4$, $B_4$, ..., $A_0$, $S_0$, $B_0$. La matrice comporte six lignes $L_0$, $L_1$, ..., $L_5$, permettant de transmettre les bits des colonnes correspondant aux mots A et B vers les colonnes correspondant au mot de sortie S. Ces lignes sont couplées aux colonnes correspondant à $S_5$, ..., $S_0$, par des transistors de commutation, qui sont des transistors MOS.

Chaque colonne $L_j$ correspondant à un bit $S_j$ du mot S est couplée aux six lignes par six transistors de commutation $T_{j0}$, $T_{j1}$, ..., $T_{j5}$. Il y a au total 6 x 6 transistors de commutation et leurs électrodes de commande sont reliées six par six, chaque ensemble de 6 transistors recevant l'un des signaux appliqués aux entrées $C_0$, ..., $C_5$ de telle façon que, lorsqu'un de ces signaux est activé, chacune des colonnes correspondant à $S_5$, ..., $S_0$ est reliée à une des lignes de la matrice.

D'autre part, les lignes $L_0$, ..., $L_5$ comportent chacune une coupure située sur une diagonale de la matrice. La ligne d'indice $j$, pour $j = 0$ à 5, est coupée en deux parties entre les colonnes correspondant à $A_j$ et $B_j$ et ces deux parties sont reliées respectivement aux colonnes correspondant à $A_j$ et $B_j$. Chaque transistor $T_{ji}$, pour $i$ et $j = 0$ à 5, couple la colonne correspondant à $S_j$ et la ligne $L_i$. Chaque transistor $T_{ji}$ a son électrode de commande reliée à celle des transistors $T_{j-1,i-1}$ (modulo 6) et $T_{j+1,i+1}$ (modulo 6).

6

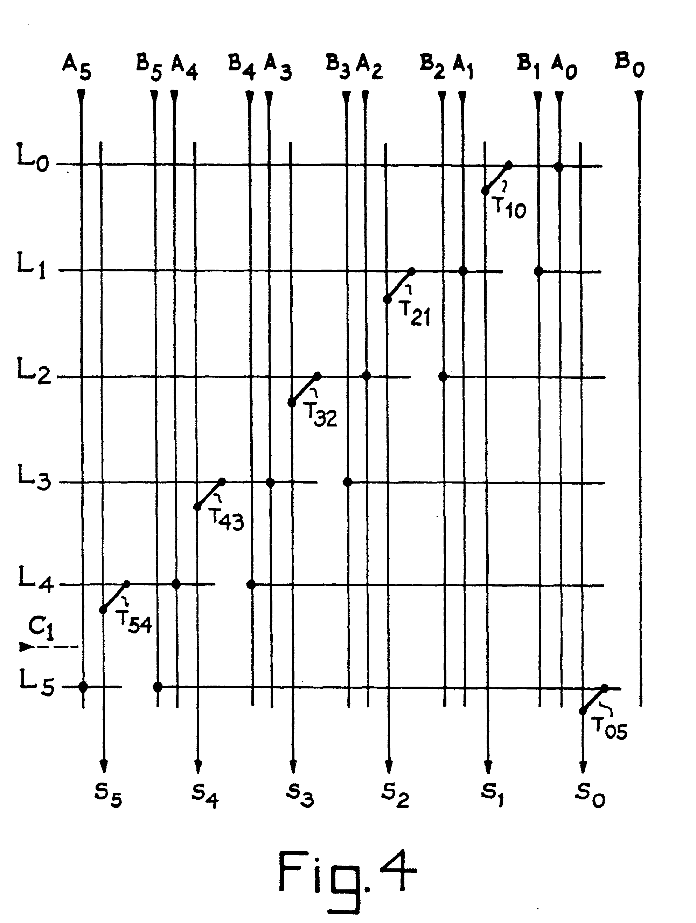

La figure 4 illustre le fonctionnement de cet exemple de réalisation de la matrice de commutation du circuit décaleur de type connu, dans le cas où elle réalise une rotation d'un bit à gauche sur les mots A, B pris dans cet ordre. L'entrée de commande $C_1$ est activée alors que les entrées de commande $C_0$ et $C_2$ , ... , $C_5$ sont inactivées. Les transistors qui sont passants : $T_{54}$ , $T_{43}$ , $T_{32}$ , $T_{21}$ , $T_{10}$ , sont représentés par un segment de droite alors que les autres transistors, qui sont bloqués, ne sont pas représentés pour clarifier la figure.

La ligne $L_0$ reçoit en permanence le bit $A_0$ et le transmet sur toute sa longueur. Elle est reliée par un transistor passant $T_{10}$ à la colonne correspondant au bit $S_1$ .

La ligne $L_1$ comporte une coupure située entre les colonnes correspondant aux bits $B_1$ et $A_1$ . Les deux parties de la ligne $L_1$ sont reliées respectivement aux colonnes correspondant aux bits $A_1$ et $B_1$ . La partie reliée à la colonne correspondant au bit $A_1$ est reliée par un transistor passant $T_{21}$ à la colonne correspondant au bit $S_2$ .

La ligne $L_2$ comporte une coupure située entre les colonnes correspondant aux bits $B_2$ et $A_2$ . Les deux parties sont reliées respectivement à ces deux colonnes. La colonne correspondant au bit $S_3$ est reliée par un transistor passant $T_{32}$ à la partie de la ligne $L_2$ reliée à la colonne correspondant au bit $A_2$ .

La ligne $L_3$ comporte une coupure entre les deux colonnes correspondant aux bits $A_3$ et $B_3$ , les deux parties étant reliées respectivement à ces deux colonnes. La partie reliée à la colonne correspondant au bit $A_3$ est reliée par un transistor passant $T_{43}$ à la colonne correspondant au bit $S_4$ .

La ligne $L_4$ comporte une coupure située entre les colonnes $A_4$ et $B_4$ , les deux parties étant reliées respectivement à ces deux colonnes. La partie reliée à la colonne correspondant au bit $A_4$ est reliée par un transistor passant $T_{54}$ à la colonne correspondant au bit $S_5$ .

La ligne $L_5$ comporte une coupure située entre les deux colonnes correspondant aux bits $A_5$ et $B_5$ , les deux parties étant reliées respectivement à ces deux colonnes. La partie reliée à la colonne correspondant au bit $B_5$ est reliée par un transistor passant $T_{05}$ , situé en bas et à droite de la figure, à la colonne correspondant au bit $S_0$ .

Le mot de sortie S est donc :

| $S_5$ | $S_4$ | $S_3$ | $S_2$ | $S_1$ | $S_0$ |
|-------|-------|-------|-------|-------|-------|
| $A_4$ | $A_3$ | $A_2$ | $A_1$ | $A_0$ | $B_5$ |

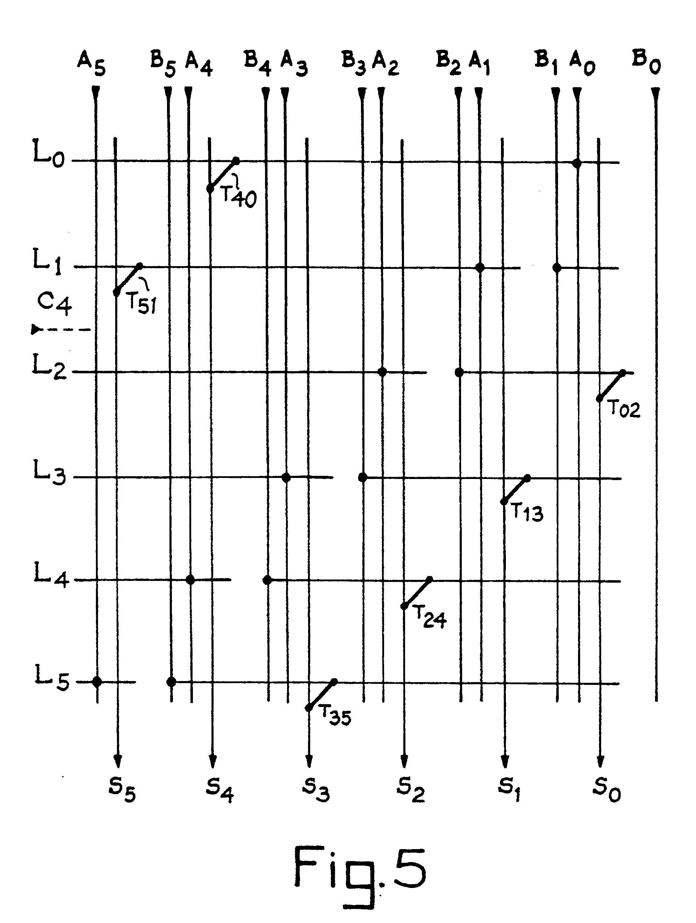

La figure 5 illustre le fonctionnement de cet exemple de réalisation de la matrice de commutation du circuit décaleur connu, dans le cas d'une rotation de quatre bits à gauche sur les mots A, B pris dans cet ordre. L'entrée de commande $C_4$ est activée. La matrice fournit un mot de sortie S dont les bits sont :

| $S_5$ | $S_4$ | $S_3$ | $S_2$ | $S_1$ | $S_0$ |
|-------|-------|-------|-------|-------|-------|
| $A_1$ | $A_0$ | $B_5$ | $B_4$ | $B_3$ | $B_2$ |

Sur la figure 5, des segments représentent les transistors $T_{40}$ , $T_{51}$ , $T_{02}$ , $T_{13}$ , $T_{24}$ , et $T_{35}$ qui sont passants dans ce cas ; les autres transistors ne sont pas représentés pour clarifier la figure.

Considérons maintenant les liaisons qui doivent être réalisées dans une matrice de commutation pour obtenir un mot binaire S correspondant à un décalage de 2 bits à droite sur deux nombres réels $X'$ et $X''$ de 3 bits chacun c'est-à-dire pour $n = 2$ et $N = 6$. Nous comparerons ensuite avec les commutations réalisées sur les figures 4 et 5, qui correspondent à des rotations à gauche de $\frac{N}{2} - n = 1$ bit et $N-n = 4$ bits portant sur A, B.

Conformément à ce qui a été décrit pour la figure 2b les bits du mot S sont :

| $S_5$ | $S_4$ | $S_3$ | $S_2$ | $S_1$ | $S_0$ |
|-------|-------|-------|-------|-------|-------|
| $A_4$ | $A_3$ | $B_5$ | $A_1$ | $A_0$ | $B_2$ |

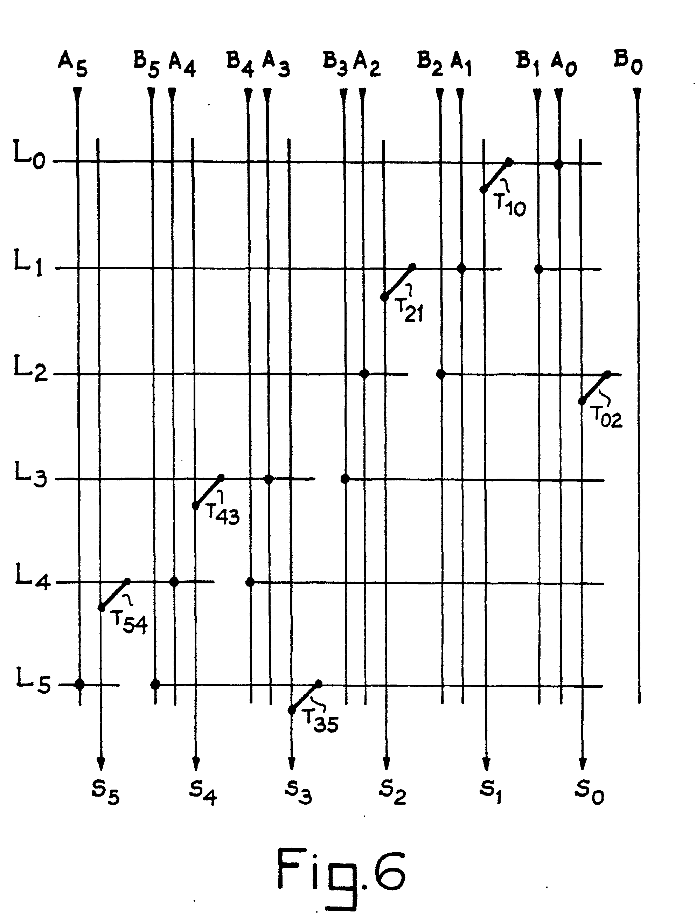

La figure 6 représente les transistors $T_{10}$ , $T_{21}$ , $T_{43}$ , $T_{54}$ , $T_{02}$ , et $T_{35}$ qui doivent être passants pour obtenir un tel mot de sortie. Une comparaison avec les figures 4 et 5 permet de constater que les commutations réalisées sur la figure 6 correspondent partiellement à la réunion des commutations réalisées sur la figure 4 pour une rotation d'un bit à gauche et sur la figure 5 pour une rotation de quatre bits à gauche, portant les mots A, B pris dans cet ordre. Il y a correspondance pour les transistors $T_{10}$, $T_{21}$, $T_{43}$, $T_{54}$, $T_{02}$, et $T_{35}$. Par contre, il y a des commutations parasites réalisées par les transistors $T_{40}$, $T_{51}$, $T_{32}$, $T_{13}$, $T_{24}$, et $T_{05}$.

Ceci montre que, si une matrice classique est utilisée et si les entrées de commande $C_1$ et $C_4$ sont activées simultanément, elle réalise les commutations nécessaires pour obtenir le décalage de deux bits à droite de deux mots réels $X'$ et $X''$ de trois bits chacun, mais elle réalise en outre des commutations parasites qui entrent en conflit avec les commutations utiles pour l'opération considérée.

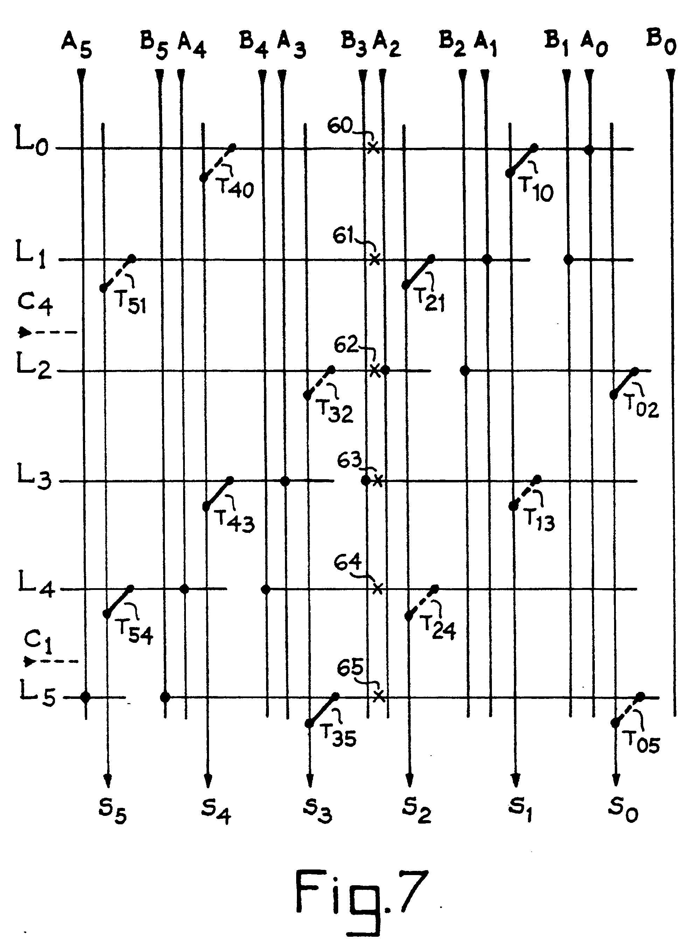

La figure 7 représente les commutations réalisées par une matrice classique lorsque les entrées de commande $C_1$ et $C_4$ sont activées, les commutations nécessaires étant représentées par un segment plein et les commutations parasites étant représentées par un segment en pointillés. Il apparaît que pour éliminer les commutations parasites réalisées par les transistors $T_{40}$, $T_{51}$, $T_{32}$, $T_{13}$, $T_{24}$, et $T_{05}$ il suffit de réaliser des coupures 60 à 65 respectivement sur les lignes $L_0$ à $L_5$ dans la zone située entre les colonnes correspondant aux bits $B_3$ et $A_2$.

Il est possible de vérifier de la même manière qu'un décalage à droite de n bits, n pouvant prendre les valeurs 0 à 2, portant sur deux nombres réels de trois bits, peut être réalisé en activant simultanément les entrées $C_{r1}$ et $C_{r2}$ telles que $r_1 = r = \frac{N}{2} - n$ et $r_2 = r + \frac{N}{2}$, c'est-à-dire $C_{3-n}$ et $C_{6-n}$, à condition de réaliser les coupures 60 à 65.

Pour pouvoir réaliser alternativement des décalages de n bits à droite sur des mots binaires de six bits, d'une part, et, d'autre part, des décalages de n bits à droite simultanément sur deux mots binaires de trois bits, il suffit d'intercaler dans les coupures 60 à 65 des transistors de commutation commandés en parallèle par un même signal de commande indiquant le type des données à décaler, tel que le signal M.

Il est possible de vérifier d'une manière analogue que la matrice ainsi modifiée permet de réaliser des décalages de n bits à gauche simultanément sur deux mots binaires de 3 bits, en activant simultanément les entrées $C_{r1}$ et $C_{r2}$ telles que $r_1 = r = n$ et $r_2 = r + \frac{N}{2} = n + \frac{N}{2}$, c'est-à-dire $C_n$ et $C_{n+3}$.

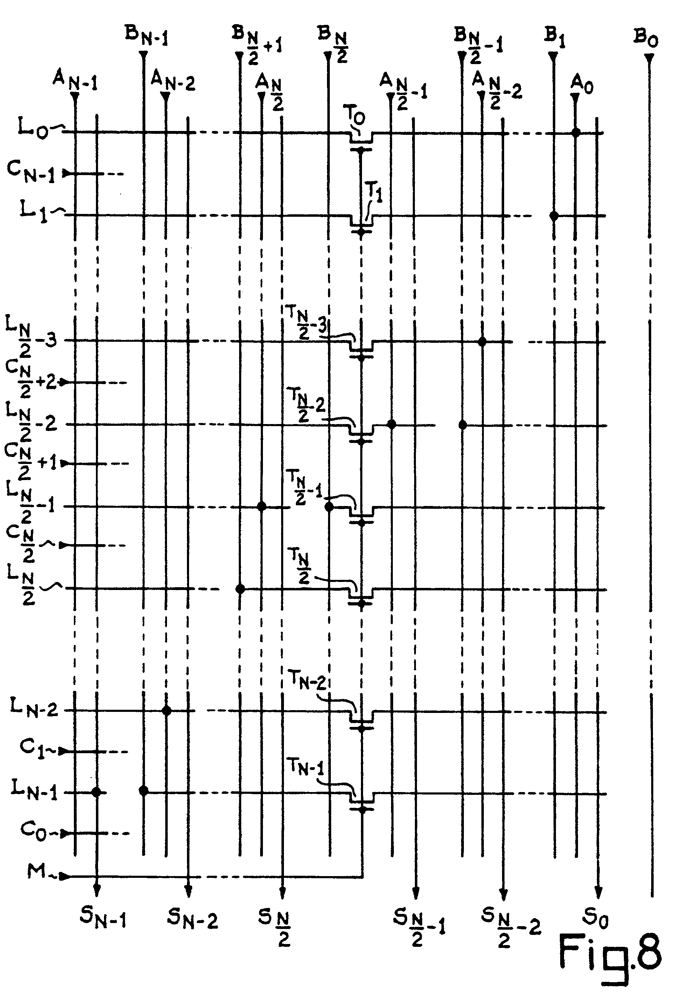

La figure 8 représente le schéma d'un exemple de réalisation de la matrice de commutation 6 d'un circuit décaleur selon l'invention, permettant de décaler soit un mot de N bits, soit deux mots de $\frac{N}{2}$ bits simultanément. Cette matrice de commutation 6 comporte comme la matrice classique une suite de colonnes correspondant respectivement à des bits

$$A_{N-1}, S_{N-1}, B_{N-1}, A_{N-2}, S_{N-2}, B_{N-2}, \ldots, N_{\frac{N}{2}+1}, A_{\frac{N}{2}}, S_{\frac{N}{2}},$$

$$B_{\frac{N}{2}}, A_{\frac{N}{2}-1}, S_{\frac{N}{2}-1}, B_{\frac{N}{2}-1}, \ldots A_0, S_0, B_0,$$

dans cet ordre, et comporte N lignes $L_0$, ..., $L_{N-1}$ couplées aux colonnes par des transistors de commutation non représentés et reliés par groupes de N, chaque groupe de N transistors étant commandé par l'une des entrées de commande $C_0$, ..., $C_{N-1}$ ; l'entrée de commande $C_r$, pour r compris entre 0 et N-1, commandant une rotation à gauche de r bits sur les mots A et B de N bits, lorsqu'elle est la seule à être activée. Chaque ligne $L_j$, pour j = 0 à N-1 comporte une coupure située entre les colonnes correspondant aux bits $A_j$ et $B_j$ et ses deux parties sont reliées en permanence respectivement à ces deux colonnes.

La matrice selon l'invention comporte en outre N transistors de commutation supplémentaires $T_0$, ..., $T_{N-1}$ intercalés dans des coupures supplémentaires réalisées respectivement sur les lignes $L_0$ à $L_{N-1}$ et situés entre les colonnes correspondant aux bits

$$A_{\frac{N}{2}-1} \text{ et } B_{\frac{N}{2}},$$

ces N transistors supplémentaires étant commandés par un même signal de commande qui est le signal M indiquant le type des mots binaires à décaler et qui est fourni au circuit décaleur en même temps que les mots à décaler.

Les entrées de commande $C_0$, ..., $C_{N-1}$ sont reliées respectivement aux sorties du décodeur de commande 5. Lorsque le signal binaire M indique que les données à décaler sont constituées par un mot X de N bits le décodeur 5 fournit un seul signal de commande, à une entrée $C_r$, r étant la valeur du mot de commande appliqué à la borne d'entrée 7 du décodeur et étant égal à n ou N-n selon que le décalage à réaliser sur X est à gauche ou à droite. Lorsque le signal binaire M indique que les données à décaler sont constituées de couples de mots binaires $X'$ et $X''$ de $\frac{N}{2}$ bits, le décodeur 5 fournit simultanément deux signaux, respectivement aux entrées $C_{r1}$ et $C_{r2}$. Les valeurs de $r_1$ et $r_2$ sont déduites de la valeur r appliquée à la borne d'entrée 7 par les relations :

$r_1 = r$

$r_2 = r + \frac{N}{2}$

$r = \frac{N}{2}-n$ ou $r = n$ selon que le décalage à réaliser sur $X'$, $X''$ est à droite ou à gauche. Dans le cas où $r = \frac{N}{2} - n$ le décodeur 5 fournit deux signaux aux entrées

$$C_{\frac{N}{2}-n} \quad \text{et} \quad C_{N-n}.$$

Dans le cas où $r = n$ le décodeur 5 fournit deux signaux aux entrées

$$C_n \quad \text{et} \quad C_{n+\frac{N}{2}}.$$

Le décodeur 5 limite automatiquement la valeur de r à $\frac{N}{2}-1$, pour le cas où la valeur r du mot binaire de commande est erronée et supérieure à $\frac{N}{2}-1$.

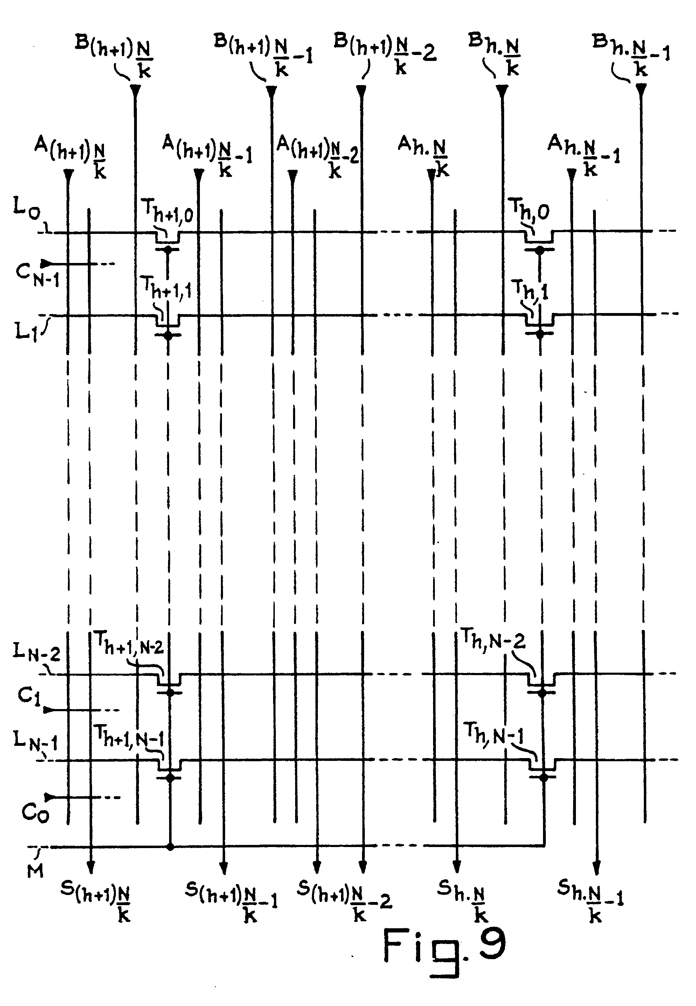

L'invention ne se limite pas à ces deux exemples de réalisation. Elle peut être généralisée pour décaler alternativement des mots de N bits et des paquets de k mots de $\frac{N}{k}$ bits, où k est un diviseur de N. La figure 9 représente le schéma synoptique d'un exemple de réalisation de la matrice de commutation 6 dans ce cas. Elle est alors semblable à celle de la figure 8 mais chaque ligne comporte k-1 coupures réalisées par des transistors de commutation $T_{h,0}$, ... , $T_{h,N-1}$ pour $h = 0$ à k-2 intercalés respectivement sur les lignes $L_0$, ... , $L_{N-1}$ entre les colonnes correspondant aux bits $B_i$, $A_i$, $S_i$ et les colonnes correspondant aux bits $B_{i+1}$, $A_{i+1}$, $S_{i+1}$, pour

$$i = (h+1).\frac{N}{k} - 1,$$

le nombre h étant un entier prenant les valeurs 0 à k-2, pour découper la matrice 6 en k paquets de colonnes. Ainsi les colonnes $S_m$ pour

$$m = h.\frac{N}{k} \text{ à } (h+1).\frac{N}{k} - 1$$

ne peuvent être couplées qu'aux colonnes $A_i$ pour

$$i = h.\frac{N}{k} \text{ à } (h+1).\frac{N}{k} - 1$$

et aux colonnes $B_j$ pour

$$j = h.\frac{N}{k} \text{ à } (h+1).\frac{N}{k} - 1,$$

pour chaque valeur de h de 0 à k-1, lorsque les transistors $T_{h,0}$, ... , $T_{h,N-1}$ sont bloqués.

Il est possible de vérifier que pour toutes les valeurs de k divisant N, les entrées de commande à activer sont

$$C_r \text{ et } C_{(\frac{k-1}{k}.N + r)}$$

pour obtenir un décalage de r bits à droite sur k mots de $\frac{N}{k}$ bits. Le décodeur 5 fournit deux signaux de commande aux entrées

$$C_r \text{ et } C_{(\frac{k-1}{k}.N + r)}$$

lorsqu'il reçoit un mot de commande de valeur r et un signal M de valeur 0 indiquant que les données à décaler sont constituées de k mots de $\frac{N}{k}$ bits, et il fournit un seul signal de commande, à l'entrée $C_r$, lorsque le signal M a la valeur 1. La réalisation d'un tel décodeur 5 est à la portée de l'homme de l'art.

Les moyens de multiplexage 4 sont adaptés pour fournir, lorsque k nombres réels de $\frac{N}{k}$ bits sont appliqués à l'entrée du circuit décaleur

- un mot A constitué de k mots de $\frac{N}{k}$ bits, chaque mot ayant $\frac{N}{k}$ bits égaux au bit de signe de l'un des k mots appliqués à l'entrée des moyens de multiplexage 4, et un mot B constitué des k nombres réels de $\frac{N}{k}$ bits, lorsqu'un décalage arithmétique à droite est à réaliser ;

- un mot A constitué de N bits nuls et un mot B constitué des k nombres réels de $\frac{N}{k}$ bits, lorsqu'un décalage logique à droit est à réaliser ;

- un mot A constitué des k nombres réels de $\frac{N}{k}$ bits et un mot B constitué de N bits nuls, lorsqu'un décalage logique à gauche est à réaliser ;

- un mot A et un mot B constitués chacun des k nombres réels de $\frac{N}{k}$ bits, lorsqu'une rotation est à effectuer.

Cette adaptation et la réalisation de ces moyens de multiplexage 4 sont à la portée de l'homme de l'art.

L'invention peut être appliquée dans les systèmes de traitement logique d'informations et en particulier les systèmes de traitement de signal, notamment lorsqu'il est nécessaire de réaliser des décalages alternativement sur des nombres réels ou sur des nombres complexes, ou bien de réaliser alternativement des décalages sur un nombre réel de N bits ou sur deux nombres réels de $\frac{N}{2}$ bits, avec une vitesse deux fois plus grande et une précision deux fois plus faible dans ce dernier cas.

## Revendications

1. Circuit décaleur permettant de décaler un mot de N bits ou k mots de $\frac{N}{k}$ bits, k étant un entier fixé qui est un diviseur de N, ces deux types de données à décaler étant distingués par la valeur d'un signal binaire M, comportant :

- des moyens de multiplexage (4) recevant les N bits de données à décaler et restituant deux mots binaires de N bits, A et B, fonctions des bits de données à décaler, du type de ces données, et du type de décalage à réaliser ;

- une matrice de commutation (6) recevant les mots A et B et restituant un mot binaire de N bits sur une sortie (9) constituant la sortie du circuit décaleur, comportant des colonnes, $A_i$ pour i = 0 à N-1, $B_j$ pour j = 0 à N-1, $S_m$ pour m = 0 à N-1, intercalées et correspondant respectivement aux bits des mots A, B, S, et comportant N lignes $L_0$ , ... , $L_{N-1}$ , et N x N transistors ($T_{00}$ à $T_{55}$) pour coupler les colonnes correspondant à S aux colonnes correspondant à A et B, ces transistors étant reliés à N entrées de commande $C_r$ , pour r = 0 à N-1, chaque entrée $C_r$ commandant une rotation de r bits sur les mots A et B ;

- un décodeur (5) couplé aux entrées $C_0$ , ... , $C_{N-1}$ pour commander la matrice de commutation (6) en fonction du type de décalage à réaliser ;

caractérisé en ce que la matrice de commutation (6) comporte en outre des moyens ($T_{h,0}$ , ... , $T_{h,N-1}$), pour réaliser k-1 coupures dans chaque ligne $L_0$ , ... , $L_{N-1}$ sous la commande du signal M, coupures situées de telle façon que les colonnes $S_m$ pour

$$m = h.\frac{N}{k} \text{ à } (h+1).\frac{N}{k} - 1,$$

ne peuvent être couplées qu'aux colonnes $A_i$ pour

$$i = h.\frac{N}{k} \text{ à } (h+1).\frac{N}{k} - 1$$

et aux colonnes $B_j$ pour

$$j = h \frac{N}{k} \text{ à } (h+1) \frac{N}{k} - 1,$$

pour chaque valeur de h de 0 à k-1 , lorsque le signal M indique que les données à décaler sont constituées de k mots de $\frac{N}{k}$ bits ;

et en ce que le décodeur (5) reçoit un mot binaire de valeur r, fonction du type de décalage à réaliser, reçoit le signal M, et fournit :
- deux signaux de commande, aux entrées

$$C_r \text{ et } C_{(\frac{(k-1)}{k}.N+r)}$$

simultanément, lorsque le signal M indique que les données à décaler sont constituées de k mots de $\frac{N}{k}$ bits à décaler ;
- un seul signal de commande, à l'entrée $C_r$ , lorsque le signal M indique que les données à décaler sont constituées d'un mot de N bits.

2. Circuit décaleur, selon la revendication 1, pour décaler un mot de N bits ou k mots de $\frac{N}{k}$ bits, caractérisé en ce que :
- les colonnes de la matrice de commutation (6) sont disposées dans l'ordre : $A_{N-1}$ , $S_{N-1}$ , $B_{N-1}$ ,... , $A_i$ , $S_i$ , $B_i$ ,... , $A_0$ , $S_0$ , $B_0$ ,
- les coupures (60 à 65) de chaque ligne $L_0$ à $L_{N-1}$ sont réalisées entre les colonnes correspondant aux bits $B_i$, $A_i$, $S_i$ et les colonnes correspondant aux bits $B_{i+1}$, $A_{i+1}$, $S_{i+1}$ pour

$$i = (h+1).\frac{N}{k} - 1,$$

le nombre h étant un entier prenant les valeurs 0 à k - 2, et en ce que les moyens pour réaliser chaque coupure comportent un transistor de commutation $T_{h,0}$ , ... , $T_{h,N-1}$ commandé par le signal de commande M.

3. Circuit décaleur selon la revendication 2, caractérisé en ce que les moyens de multiplexage (4) comportent des moyens (1, 2, 3) pour :
- lorsque les données à décaler sont constituées d'un nombre réel X de N bits, restituer deux mots binaires A et B constitués, selon le type du décalage à réaliser, de N fois le bit de signe X, ou de N bits nuls, ou des N bits du nombre X ;
- lorsque les données à décaler sont constituées de k nombres réels de $\frac{N}{k}$ bits, restituer deux mots binaires A et B constitués, selon le type du décalage à réaliser, des k nombres réels de $\frac{N}{k}$ bits, ou de k mots de $\frac{N}{k}$ bits chaque mot étant constitué de k bits égaux au bit de signe de l'un des k nombres réels, ou de N bits nuls.

4. Circuit décaleur selon l'une des revendications 2 ou 3, caractérisé en ce que le décodeur (5) limite à $\frac{N}{k}$ -1 la valeur r du mot qu'il reçoit, lorsque le signal M indique que les données à décaler sont constituées de k mots de $\frac{N}{k}$ bits.

**Claims**

1. A shift circuit for shifting a word consisting of N bits or for shifting k words consisting of N/k bits, with k being a fixed integer which is a divider of N, said two types of data to be shifted being distinguished by the value of a binary signal M, the circuit comprising:

- multiplex means (4) adapted to receive the N bits of the data to be shifted and to restitute two binary words A and B consisting of N bits in accordance with the bits of the data to be shifted, with the type of said data, and with the type of shifting to be realized;
- a switch matrix (6) adapted to receive the words A and B and to restitute a binary word consisting of N bits on an output (9) forming the output of the shift circuit, the matrix comprising columns $A_i$ with i = 0 to N-1, columns $B_j$ with j = 0 to N-1, columns $S_m$ with m = 0 to N-1, intersticked and corresponding respectively to the bits of the words A, B, S, and comprising N lines $L_0$, ...., $L_{N-1}$ and N x N transistors ($T_{00}$ to $T_{55}$) for connecting the columns corresponding to S to the columns corresponding to A and B, said transistors being connected to N control inputs $C_r$ with r = 0 to N-1, and each input $C_r$ being adapted to cause a rotation of r Bits on the words A and B;
- a decoder (5) coupled to the inputs $C_0$ $C_{N-1}$ for controlling the switch matrix (6) according to the type of shifting to be performed; characterized in that the switch matrix (6) further includes means ($T_{h,0}$, ..., $T_{h,N-1}$) for performing k-1 breaks within each line $L_0$, ..., $L_{N-1}$ under the control of the signal M, which breaks are positioned such, that the columns $S_m$ with m = h.N/k to (h+1) . (N/k)-1 can only be coupled to the columns $A_i$ for i = h.N/k to (h+1) . (N/k)-1 and to the columns $B_j$ for j = h N/k to (h+1) (N/k)-l and for each value of h ranging from 0 to k-1, when the signal M indicates, that the data to be shifted are constituted of k words consisting of N/k bits; and in that the decoder (5) receives a binary word of value r as a function of the type of shifting to be performed, that it receives the signal M, and that it delivers:
- two control signals to the inputs $C_r$ and

$$C_{\left(\frac{k-1}{k}.N+r\right)}$$

simultaneously, when the signal M indicates that the data to be shifted are constituted of k words consisting of N/k bits to be shifted; and
- a unique control signal to the input $C_r$, when the signal M indicates that the data to be shifted are constituted of a word consisting of N bits.

2. A shift circuit according to claim 1 for shifting a word consisting of N bits or for shifting k words consisting of N/k bits, characterized in that:
- the columns of the switch matrix (6) are disposed in the order of: $A_{N-1}$, $S_{N-1}$, $B_{N-1}$, ..., $A_i$, $S_i$, $B_i$ , ...., $A_0$, $S_0$, $B_0$;
- the breaks (60-65) in each line $L_0$ to $L_{N-1}$ are performed between the columns corresponding to the bits $B_i$, $A_i$, $S_i$ and the columns corresponding to the bits $B_{i+1}$, $A_{i+1}$, $S_{i+1}$ for i = (h+1) . (N/k)-1, the number h being an integer adopting the values 0 to k-2, and in that the means for realising each break include a switch transistor $T_{h-0}$, ...., $T_{h,N-1}$ controlled by the control signal M.

3. A shift circuit according to claim 2, characterized in that the multiplex means (4) include means (1, 2, 3) provided for:
- restituting two binary words A and B which are constituted according to the shifting type to be performed of N times the bit of the sign of X, or N nul bits, or else N bits of the number X, when the data to be shifted are constituted of a real number X of N bits;
- restituting two binary words A and B which are constituted according to the shifting type to be performed of k real numbers of N/k bits, or of k words of N/k bits, with each word being constituted of k bits equal to the sign bit of one of the k real numbers, or else of N nul bits, when the data to be shifted are constituted of k real numbers of N/k bits.

4. A shift circuit according to anyone of the claims 2 to 3, characterized in that the decoder (5) limits the value r of the word received to (N/k)-1, when the signal M indicates that the data to be shifted are constituted of k words consisting of N/k bits.

**Ansprüche**

1. Schiebeschaltung zum Verschieben eines Wortes bestehend aus N Bits oder von k Wörtern zu N/k Bits, wobei k eine feste ganze Zahl und ein Teiler von N ist, und wobei diese beiden zu verschiebenden Datenarten durch den Wert eines Binärsignals M unterschieden werden und die Schaltung folgende Komponenten aufweist:

- Multiplexmittel (4), welche die N Bits der zu verschiebenden Daten empfangen und zwei binäre Wörter A und B mit je N Bits ausgeben nach Maßgabe der Bits der zu verschiebenden Daten, des Typs dieser Daten, und vom Typ der durchzuführenden Verschiebung;
- eine Schaltmatrix (6), welche die Wörter A und B empfängt und ein Binärwort zu N Bits an einem Ausgang (9) liefert, der den Ausgang der Schiebeschaltung bildet, wobei die Matrix Spalten $A_i$, mit i = 0 bis N-1, Spalten $B_j$, mit j = 0 bis N-1, und Spalten $S_m$, mit m = 0 bis N-1, aufweist, die ineinanderverschachtelt sind und jeweils den Bits der Wörter A, B, S entsprechen, und N Zeilen $L_0$, ..., $L_{N-1}$ sowie NxN Transistoren ($T_{00}$ bis $T_{55}$) aufweist, um die dem Wort S entsprechenden Spalten mit den den Wörtern A und B entsprechenden Spalten zu koppeln, und wobei die Transistoren an N Steuereingänge $C_r$, mit r = 0 bis N-1, angeschlossen sind und jeder Steuereingang $C_r$ eine Drehung um r Bits bezüglich der Wörter A und B steuert;
- einen Dekodierer (5), der an die Eingänge $C_0$, ..., $C_{N-1}$ zur Steuerung der Schaltmatrix (6) in Abhängigkeit vom Typ der durchzuführenden Verschiebung angeschlossen ist;
dadurch gekennzeichnet, daß die schaltmatrix (6) weiter Mittel ($T_{h,0}$, ..., $T_{h,N-1}$) zur Ausführung von k-1 Schnitten in jeder Zeile $L_0$, ..., $L_{N-1}$ auf Befehl des Signals M aufweist, wobei die Schnitte derart gelegt sind, daß die Spalten $S_m$, für m = h.N/k bis (h+1). (N/k)-1 nur an die Spalten $A_i$ für i = h.N/k bis (h+1).(N/k)-1, und an die Spalten $B_j$ für j = h.N/k bis (h+1) (N/k)-1 gekoppelt werden können, und zwar für jeden Wert h von 0 bis k-1, wenn das Signal M anzeigt, daß die zu verschiebenden Daten aus k Wörtern zu N/k Bits bestehen; und daß der Dekodierer (5) ein Binärwort mit dem Wert r nach Maßgabe des Typs der durchzuführenden Verschiebung sowie das Signal M empfängt, und daß er folgende Signale liefert:
- zwei Befehlssignale gleichzeitig an die Eingänge $C_r$ und

$$ C_{\left(\frac{k-1}{k} \cdot N + r\right)} $$

wenn das Signal M anzeigt, daß die zu verschiebenden Daten aus k Wörtern von N/k zu verschiebenden Bits bestehen, und
- ein einzelnes Befehlssignal an den Eingang $C_r$, wenn das Signal M anzeigt, daß die zu verschiebenden Daten aus einem Wort zu N Bits bestehen.

2. Schiebeschaltung nach Anspruch 1 zum Verschieben eines Wortes bestehend aus N Bits oder von k Wörtern aus N/k Bits, dadurch gekennzeichnet, daß:
- die Spalten der Schaltmatrix (6) in der Reihenfolge: $A_{N-1}$, $S_{N-1}$, $B_{N-1}$, . . . , $A_i$, $S_i$, $B_i$, . . . , $A_0$, $S_0$, $B_0$ angeordnet sind;
- die Schnitte (60 bis 65) jeder Zeile $L_0$ bis $L_{N-1}$ zwischen den den Bits $B_i$, $A_i$, $S_i$ entsprechenden Spalten und den den Bits $B_{i+1}$, $A_{i+1}$, $S_{i+1}$ entsprechenden Spalten erfolgen, mit i = (h+1). (N/k)-1, wobei h eine ganze Zahl mit den Werten 0 bis k-2 ist, und daß die Mittel zur Ausführung jedes Schnitts einen Schalttransistor $T_{h,0}$, ..., $T_{h,N-1}$ aufweisen, der durch das Befehlssignal M gesteuert wird.

3. Schiebeschaltung nach Anspruch 2, dadurch gekennzeichnet, daß die Multiplexmittel (4) Mittel (1, 2, 3) zu folgenden Zwecken aufweisen:
- Lieferung zweier binärer Wörter A und B, die entsprechend dem durchzuführenden Verschiebungstyp N-mal aus dem Vorzeichenbit X, oder aus N Hullbits, oder aus den N Bits der Zahl X bestehen, wenn die zu verschiebenden Daten aus einer reellen Zahl X von N Bits bestehen; und
- Lieferung zweier binärer Wörter A und B, die entsprechend dem durchzuführenden Verschiebungstyp aus k reellen Zahlen zu N/k Bits oder aus k Wörtern zu N/k Bits bestehen, wobei jedes Wort aus k Bits, übereinstimmend mit dem Vorzeichenbit einer der k reellen Zahlen, oder aus N Nullbits besteht, wenn die zu verschiebenden Daten aus k reellen Zahlen zu N/k Bits bestehen.

4. Schiebeschaltung nach einem der Ansprüche 2 oder 3, dadurch gekennzeichnet, daß der Dekodierer (5) den Wert r des empfangenen Wortes auf (N/k)-1 begrenzt, wenn das Signal M anzeigt, daß die zu verschiebenden Daten aus k Wörtern zu N/k Bits bestehen.

EP 0 228 948 B1

**Fig.1**

Xou(X',X")

DÉCODEUR DE COMMANDE

MATRICE DE COMMUTATION

**Fig.2a**

| A | B |
|---|---|
| Signe de X | X |

n bits — N-n bits

S

**Fig.2b**

| A | B |
|---|---|
| Signe de X' | Signe de X" | X' | X" |

n bits — $\frac{N}{2}$-n bits

S

14

Fig.3

15

Fig.4

Fig.5

Fig.6

Fig.7

Fig.8

Fig.9